(19)

Europäisches
Patentamt
European
Patent Office
Office européen
des brevets

(11)  **EP 3 680 825 A1**

(12)  # EUROPEAN PATENT APPLICATION

(43) Date of publication:
**15.07.2020  Bulletin 2020/29**

(51) Int Cl.:
*G06N 3/063* (2006.01)    *G06N 3/04* (2006.01)

(21) Application number: **19150781.3**

(22) Date of filing: **08.01.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Universität Zürich**
**8006 Zürich (CH)**

(72) Inventors:
• **Indiveri, Giacomo**
  **8052 Zürich (CH)**
• **Nair, Manu Vijayagopalan**
  **8304 Wallisellen (CH)**

(74) Representative: **Vesterinen, Jussi Tapio**
**LUMI IP GmbH**
**Rodtmattstrasse 45**
**3014 Bern (CH)**

(54)  ## RANDOM WEIGHT GENERATING CIRCUIT

(57)  The present invention relates to a circuit for generating random weights for neuromorphic processors, for example. The circuit comprises a first voltage node (VDD) for providing a supply voltage for the circuit; a second voltage node (VG) at a given electric potential; a first circuit element (Ma1) with a first electric current carrier concentration for outputting a first circuit element output signal; and a second circuit element (Mb1) with a second electric current carrier concentration for outputting a second circuit element output signal. The first and second circuit elements are located between the first and second voltage nodes, which have a given voltage difference between them. The first circuit element output signal and the second circuit element output signal are different due to the first and second electric carrier concentrations being mismatched. The circuit further comprises a subtraction unit configured to generate a respective random weight, which is represented by a difference between the first circuit element output signal and the second circuit element output signal.

Fig. 2

EP 3 680 825 A1

**Description**

TECHNICAL FIELD

The present invention relates to a random weight generating circuit to be used for instance in analogue or mixed-signal analogue-digital very-large-scale integration (VLSI) implementations of artificial neural networks. The circuit may comprise a compact synapse memory cell for use in neuromorphic processors. More specifically, the proposed circuit takes advantage of a mismatch between a given property of two devices in the circuit. The invention also relates to a method of operating the circuit.

BACKGROUND OF THE INVENTION

Recurrent neural networks (RNNs) are powerful algorithms for processing temporal information. The effectiveness of hardware implementations of RNNs in processing temporal data makes it compelling to use them in ultra-low power applications, such as biomedical implants or energy-harvesting smart sensors. However, these algorithms are computationally expensive in classical von Neumann architectures. In-memory computing architectures address this problem by performing analogue or digital compute operations within the memory itself instead of moving the data to the processor and back. This approach has been demonstrated for various applications, including neuromorphic processors which comprise synaptic memory cells containing circuits that implement scaling and filtering functions.

A mixed-signal neuromorphic processor typically uses low-precision and mismatch prone synaptic weights. Conventional RNNs typically use backpropagation through time (BPTT) to train the network. However, this is difficult to be implemented on-chip in neuromorphic platforms. This problem can be by-passed by resorting to an alternative RNN computing paradigm based on "reservoir computing", where the difficult-to-train parameters that define the recurrent connectivity are not trained. Instead, the recurrent synaptic weights are initialised randomly with an eigen-spread chosen such that they have the "echo-state property". This property ensures that in the absence of an input signal, the network activity becomes zero in the steady state. To achieve this, the randomly generated network weights are re-scaled such that the largest eigen-value of the recurrent matrix is made sufficiently small. In this state, the recurrent network acts as a dynamic system that projects the temporal and spatial properties of the incoming data into a high-dimensional space. The projections in this high-dimensional space can then be classified using a shallow feed-forward network, which can be trained online in a neuromorphic platform.

Reservoir RNNs typically do not perform as well as BPTT trained RNNs in complex tasks, such as speech recognition or translation, but are adequate for simpler tasks, such as object tracking, motion prediction or event detection. Reservoir computing is a framework for computation that may be viewed as an extension of artificial neural networks. Typically, an input signal is fed into a fixed (and random) dynamic system called a reservoir and the dynamics of the reservoir map the input to a higher dimension. A simple readout mechanism is trained to read the state of the reservoir and map it to the desired output. The main benefit is that training is carried out only at the readout stage and the reservoir is fixed. Liquid-state machines and echo state networks are two common types of reservoir computing solutions. Spiking neuromorphic reservoirs can implement such networks in a very energy-efficient manner. However, neuromorphic reservoirs require scalable random synaptic weights for the recurrent connectivity matrix to ensure that the network operates in the "echo-state" regime. However, currently known circuits for generating random weights are rather complex and they consist of many components and it is thus very challenging to make them compact. The synaptic weights require a sufficiently high resolution to ensure that the distribution of the sampled weights is representative of a random distribution. Achieving high resolution by allocating several bits of memory per cell costs too much area and therefore, does not scale well.

SUMMARY OF THE INVENTION

The objective of the present invention is thus to overcome at least some of the above limitations relating to circuits capable of generating random weights. More specifically, the present invention addresses the size and power consumption limitations of existing random weight generating circuits.

According to a first aspect of the invention, there is provided a random weight generating circuit as recited in claim 1.

The present invention has the advantage that the proposed circuit consists of only very few components and thus is very compact. The energy consumption of the circuit can also be made very small. Thus, the proposed circuit can be used in ultra-low power applications, such as biomedical implants, optionally implanted under the skin, and energy-harvesting smart sensors. The proposed circuit can enable a new family of smart sensory applications that have not been possible so far. Examples of these applications are a solar-energy harvesting sticker with smart monitoring capabilities, or a glucose (or other property) harvesting implant which detects disruptions in natural bio-rhythms.

According to a second aspect of the invention, there is provided a neuromorphic processor comprising the circuit according to the first aspect of the present invention.

According to a third aspect of the invention, there is provided a method of generating one or more random weights as recited in claim 15.

Other aspects of the invention are recited in the dependent claims attached hereto.

BRIEF DESCRIPTION OF THE DRAWINGS

Other features and advantages of the invention will become apparent from the following description of a non-limiting example embodiment, with reference to the appended drawings, in which:

- Figure 1 is a neuromorphic processor block diagram illustrating a circuit, where the teachings of the present invention may be applied;

- Figure 2 is a circuit diagram showing a reservoir synapse circuit using a differential pair according to an example of the present invention;

- Figure 3 is a circuit diagram showing a reservoir synapse circuit using a differential pair and further comprising a differential pair integrator circuit according to an example of the present invention;

- Figure 4a is circuit diagram showing a portion of the circuit of Figure 2;

- Figure 4b is a circuit diagram showing another portion of the circuit of Figure 2;

- Figure 5a is a circuit diagram showing a portion of the circuit of Figure 3;

- Figure 5b is a circuit diagram showing the circuit of Figure 5a, but where some of the circuit elements are memristive devices instead of transistors; and

- Figure 5c is a circuit diagram showing another portion of the circuit of Figure 3.

DETAILED DESCRIPTION OF AN EMBODIMENT OF THE INVENTION

An embodiment of the present invention will now be described in detail with reference to the attached figures. This embodiment is described in the context of a neuromorphic processor implementing reservoir computing, but the teachings of the invention are not limited to this environment. For example, the teachings of the present invention are not limited to reservoir computing or to neuromorphic processors. The teachings of the present invention may equally be used in cryptography, for instance. The example non-limiting embodiment of the present invention relates to a differential current-mode circuit arrangement. In the present description, by a differential circuit is understood a circuit in which critical signals are represented by the difference or by another mathematical relationship of two signals (or their signal amplitude values) rather than a single signal. It is to be noted that the word "signal" is used in the present description in its broad sense, and this word does not imply that any information would be coded in the signal. Furthermore, because the circuit of the present embodiment is a current-mode circuit, these signals are currents. Identical or corresponding functional and structural elements which appear in different drawings are assigned the same reference numerals.

It will be shown below that memory cells of a neuromorphic processor can be made much smaller by restricting the chip functionality to reservoir networks. To this end, the present invention proposes a compact, such as a three-transistor, analogue memory cell that implements a real-valued and tuneable memory by exploiting complementary metal-oxide-semiconductor (CMOS) mismatch or more broadly silicon mismatch or other type of mismatch between two circuit devices or elements. The analogue memory cell forms a synaptic cell or synapse for short. This approach enables implementing for instance compact and ultra-low power accelerators that consume less than 1 mW when running an RNN with a few hundred units. A circuit variant suitable for use with memristive or capacitive circuit elements will also be proposed.

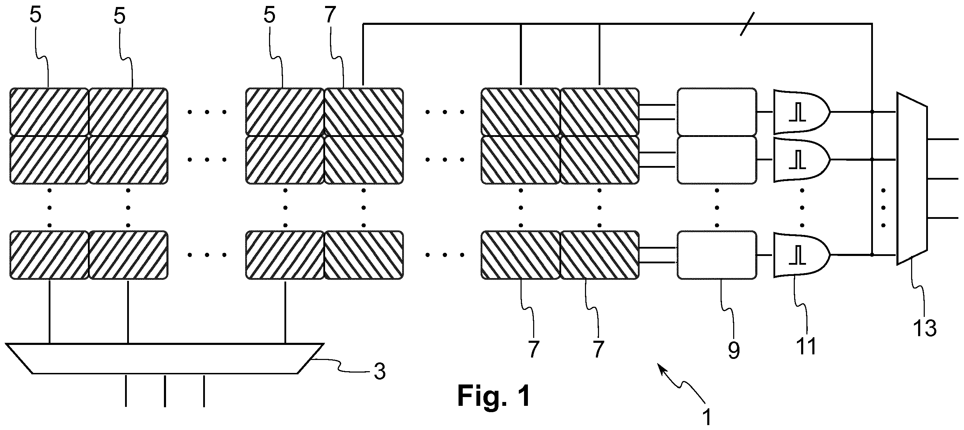

The block diagram of Figure 1 illustrates an example neuromorphic processor 1, where the teachings of the present invention may be applied. The processor comprises an input interface 3 for receiving input signals and for feeding the input signals into first synapses 5, referred to also as input or non-recurrently connected synapses, illustrated in Figure 1 by blocks with forward hashing. The processor 1 comprises a given number of input synapses forming a set or array of input synapses 5, which are non-recurrently connected synapses. The processor 1 also comprises second synapses 7 forming a set or array of recurrently connected synapses. The recurrently connected synapses 7 are illustrated in Figure 1 by blocks with backward hashing. As is further shown in Figure 1, a given row of synapses (consisting of recurrently and non-recurrently connected synapses) is connected to its respective amplifier and input stage unit 9. More specifically, the outputs of all the synapses are summed and the sum is fed into the amplifier and input stage unit 9. The respective amplifier and input stage unit 9 receives a first output signal and a second, different output signal from a given row of synapses as will be explained later. An output of a given amplifier and input stage unit 9 is connected to an input of a respective neuron 11, operating in this example as a spiking neuron, arranged to generate output signals, also referred to as spikes, which are binary control signals (voltages), and which in this example are fed back to the synapses 7 to thus form recurrently connected synapses 7. This feed-back mechanism also enables the neuromorphic processor to operate as a neuromorphic reservoir. The outputs of the neurons 11 are connected to a readout unit or block 13, which thus forms the output of the entire neural network.

The inputs to the synaptic array are encoded in spike or pulse trains. Each spike event turns on a synapse for a brief duration during which it generates two output different signals or currents, which are used to obtain its weight or importance coefficient or parameter defining the strength of a connection between two circuit nodes. The currents from all the synapses 5, 7 in a row are integrated by a single neuron 11. The neuron applies a non-linearity to the integrated current and transmits the output by encoding it in spike or pulse trains. The input stream to the reservoir consisting of the recurrently connected synapses 7 is fed in through at least some of the input synapses 5, which are similar to the synapses in the reservoir in all aspects other than they are not recurrently connected to the neurons 11. The synaptic weights are in this example read in the form of currents that are collected by the neurons and transformed to spike trains again.

Implementing a neuromorphic reservoir requires three components: 1) a sufficiently fast communication protocol to carry the spikes, 2) a neuron capable of encoding the temporal signals in spike trains with sufficient precision, and 3) randomly generated synaptic weights with a tunable eigen-spread. The address-event representation (AER) communication protocol has traditionally been the workhorse for neuromorphic event-based computation and performs well. Both the input interface 3 and the readout unit 13 may use this protocol. The third component is a memory cell (i.e. a synapse in this example) with random synaptic weights and a tunable eigen-spread. This can be built by incorporating several bits of memory in each synaptic cell and programming them with suitable values. However, for implementing neuromorphic reservoirs, it will be shown that the synaptic weights can be implemented by a compact 3-transistor circuit, for instance. The circuit eliminates the need for digital memory cells in synapses entirely. This dramatically reduces the synaptic cell area enabling neuromorphic processors that can advantageously implement recurrent networks with an order of magnitude more neurons and synapses.

The key idea in the proposed synapse circuit is to use the mismatch between a given internal property of two separate components or devices in the synapse circuit. In other words, current carrier concentrations of these two devices are mismatched, which makes it possible to generate the random weights according to the teachings of the present invention. In the embodiment explained below, the key idea in the proposed synapse circuit is to use the CMOS mismatch.

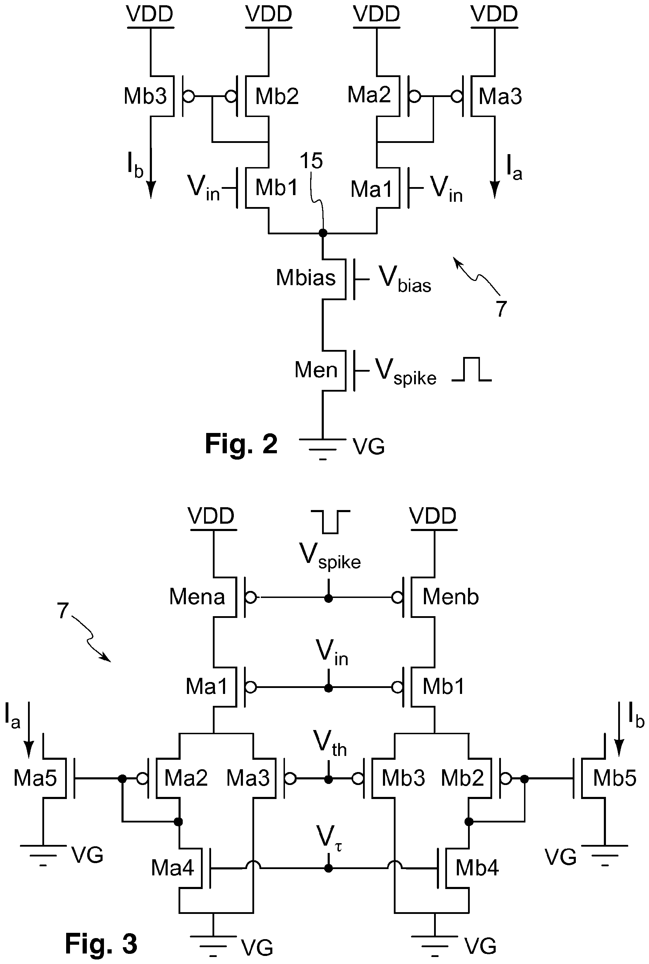

Figure 2 shows a reservoir synapse circuit using a differential pair according to the present example. The synapse circuit comprises a first device Ma1, which in this example is a first transistor, and more specifically a first metal-oxide-semiconductor field-effect transistor (MOSFET) optionally operated in the sub-threshold region. The first device is part of a first circuit output branch and outputs a first output signal $I_a$, which in this example is a first output current. During operation of the circuit, the first output current $I_a$ also flows through the first device Ma1. The operation of the first device is arranged to be controlled by a first control signal, referred to as a first control voltage $V_{in}$, at its gate terminal. The synapse circuit also comprises a second device Mb1, which in this example is a second transistor, and more specifically a second MOSFET optionally operated in the sub-threshold region. The second device is part of a second circuit output branch and outputs a second output signal $I_b$, which in this example is a second output current. During operation of the circuit, the second output current $I_b$ also flows through the first device Ma1. The operation of the second device is arranged to be controlled by the first control signal $V_{in}$ at its gate terminal. This means that the same control signal is used to control the first and second devices Ma1, Mb1. The first and second devices Ma1, Mb1 are configured in a differential mode and form a differential pair because their source terminals are connected to a common circuit node 15.

A first synapse readout circuit is connected between a first voltage reference node, referred to as a supply voltage source VDD, and the first device Ma1 for reading or copying the first output signal $I_a$. The supply voltage source is configured to produce a constant analogue voltage. The first synapse readout circuit is in this example a first current mirror. As is shown in Figure 2, the first current mirror comprises a third transistor Ma2 and a fourth transistor Ma3, whose source nodes or terminals are connected to the first reference voltage node VDD. The drain terminal of the third transistor Ma2 is connected to the drain terminal of the first transistor Ma1.

A second synapse readout circuit is connected between the first voltage reference node VDD and the second device Mb1 for reading or copying the second output signal $I_b$. The second synapse readout circuit is in this example a second current mirror. As is further shown in Figure 2, the second current mirror comprises a fifth transistor Mb2 and a sixth transistor Mb3, whose source terminals are connected to the first reference voltage node VDD. The drain terminal of the fifth transistor Mb2 is connected to the drain terminal of the second transistor Mb1.

The source terminals of the first and second transistors Ma1, Mb1 are connected through the common node 15 to a seventh transistor Mbias, and more specifically to its drain terminal. The gate terminal of the seventh terminal is arranged to be controlled by a second control signal, referred to as a bias voltage $V_{bias}$. The seventh transistor Mbias, and more specifically its source terminal, is connected to an eight transistor Men, and more specifically to its drain terminal. The source terminal of the eight transistor is connected to a second reference voltage node VG, which in this example is at zero electric potential, i.e. the source terminal of the eight transistor is grounded. The gate terminal of the eight transistor is arranged to receive a third control signal, referred to as a spike signal or spike voltage $V_{spike}$, to selectively turn on or off the switch formed by the eight transistor. In the present example, all the transistors of the circuit of Figure 2 are MOSFETs operated in the sub-threshold region. More specifically, the transistors of the current mirrors are in this example p-channel MOSFETs while the other transistors of the circuit are n-channel MOSFETs.

The weight of a respective synaptic cell 5, 7 can be implemented as the difference at a given time instant between the current (signal amplitude) flowing in the two output branches of a differential pair as shown in Figure 2, i.e. $I_w = I_a - I_b$. Using a differential arrangement eliminates systematic effects caused by location-dependent properties during fabrication such as doping and temperature on the wafer. The weights can be tuned up or down by scaling the tail current $I_{bias}$, where $I_{bias} = I_a + I_b$, of the circuit, i.e. the current flowing through the transistor Mbias. This can be carried out by adjusting the control voltage $V_{bias}$. In this manner, the output currents $I_a$ and $I_b$ can be adjusted. Clearly, the synaptic weight, $I_w$ will scale linearly with the tail current. It is to be noted that in the present example, a synaptic weight is calculated individually for each synapse in the neuromorphic processor. Furthermore, the biasing state or condition of the circuit defined e.g. by $V_{in}$ and $V_{bias}$ may be kept constant once initially set. This would mean that the weights of the synapses would not change over a plurality of spiking cycles. Alternatively, it would be possible to change the biasing condition for each spiking cycle or at least for some of the spiking cycles. The same biasing condition is typically applied for all of the synapses of the neuromorphic processor. However, instead, it would be possible to apply different biasing conditions for at least some of the synapses of the neuromorphic processor.

The weights implemented by the differential pair circuit of Figure 2 were sampled by running Monte-Carlo mismatch simulations. The results show a linear relationship between the eigen-spread and the tail current. The weights in the network for different values of the tail current exhibit a Gaussian-like distribution with zero mean. Using a differential arrangement addresses the problem of systematic mismatch between the first and second devices and tunable eigen-value spread. However, a few aspects may still be optimised. The output current can get saturated to the tail bias current if the two branches of the differential pair are highly mismatched. This will cause clipping in the output weight distribution. Furthermore, the power consumption of the differential circuit in the absence of input spikes can be non-zero because of parasitic charges in the gates of transistors Ma3 and Mb3. This can be addressed by pulling the gates to VDD in the absence of a spike, but that would need more devices increasing the cell footprint. These problems can be overcome by using a differential pair integrator (DPI) to implement the amplifier stage as for example explained by E. Chicca et al. "Neuromorphic electronic circuits for building autonomous cognitive systems", as published in Proceedings of the IEEE 102.9 (Volume: 102, Issue: 9, Sept. 2014), pp. 1367-1388, ISSN: 0018-9219.

The DPI synapse circuit configuration as shown in Figure 3 consists of two symmetric blocks, namely a first block and a second block, each comprising six transistors according to this example. Transistors Ma2-5 and Mb2-5 form the DPI circuit where transistors Ma5 and Mb5 are the output transistors. The transistors Ma2 and Ma5 form a first DPI circuit current mirror while the transistors Mb2 and Mb5 form a second DPI circuit current mirror. The transistor Ma3 is in parallel with the transistors Ma2 and Ma4 (which are in series) while the transistor Mb3 is in parallel with the transistors Mb2 and Mb4 (which are in series). It is to be noted that the configuration of Figure 3 comprises two switches, namely Mena and Menb, i.e. one switch for each one of the DPI circuit input branches. However, it would be possible to build the circuit by using only one switch (Men) instead, which would be shared between both the DPI circuit input branches (similar to the configuration of Figure 2). The equation describing the behaviour of the circuit valid in the sub-threshold mode is given by

$$V_\tau \frac{d}{dt} I_{out} + I_{out} = \frac{I_{th}}{I_\tau} I_{in},\qquad(1)$$

where, $V_\tau$ is control voltage, and more specifically a fourth control voltage, i.e. the voltage controlling the operation of the transistors Ma4 and Mb4, and more specifically their gate voltages, and is close to zero because capacitors are taken out of the DPI circuit in this implementation. $I_{out}$ denotes the output current, which is either $I_a$ or $I_b$. $I_{in}$ is the input current of the DPI circuit (flowing either in or out of the DPI circuit depending on its implementation) and is also the current through the transistors Ma1 or Mb1, $I_{th}$ is a current generated by a fifth control voltage $V_{th}$, which is the control voltage controlling the gates of the transistors Ma3 and Mb3, while $I_\tau$ is the current through the transistors Ma4 or Mb4 and generated by the control voltage $V_\tau$. The gain of this circuit is given by $\gamma = \frac{I_{th}}{I_\tau}$. As in the differential version of Figure 2, the reservoir synapse circuit stores the weight in the difference between the two outputs as $I_w = I_a - I_b$.

The circuit addresses the problems present in the differential pair of Figure 2 because it does not saturate and has no floating gates in the absence of a spike. One potential problem with the circuit is that the output currents could deviate from Equation 1 for above-threshold currents.

In the absence of a mismatch,

$$I_a = I_b = I_{in} \times \frac{I_{th}}{I_\tau} = I_{in} \times \gamma, \tag{2}$$

where, $I_{in}$ is again the current flowing through the transistors Ma1 and Mb1 when there is a spike event. The mismatch between $I_a$ and $I_b$ can be modelled to a first order approximation as

$$I_x = (I_{mean} + \Delta I_{in}/2) \times (\gamma_{mean} + \Delta \gamma/2), \tag{3}$$

where, $x = a$ or b. Using this convention, after some basic algebra, the stored synaptic weight, $I_w$ can be expressed as

$$I_w = \Delta \gamma \times I_{mean} + \Delta I_{in} \times \gamma_{mean} \tag{4}$$

Equation 4 shows that the effective value of the weight stored in the arrangement of Figure 3 is the sum of the mismatch between the gain and $I_{in}$ of the "a" and "b" branches of the synapse scaled by the mean values of the bias and gain values, respectively. The mean and standard deviation in the distribution of synaptic weights, $I_w$ can be scaled by either increasing $I_{in}$ (by adjusting $V_{in}$) or the gain in the circuit. This also changes the eigen-spread of the reservoir weights.

Monte Carlo simulations show that the resultant distribution of the weights resembles a Gaussian distribution (when considering the weights of the entire synapse array). A scaling factor is applied to the output currents representing the synaptic weight, $I_w$, to account for the input range of the neuron integrating the output currents. By tuning the gain $\gamma$ and $I_{in}$, the spread of the weights and the largest eigen-value can be controlled in an almost linear fashion.

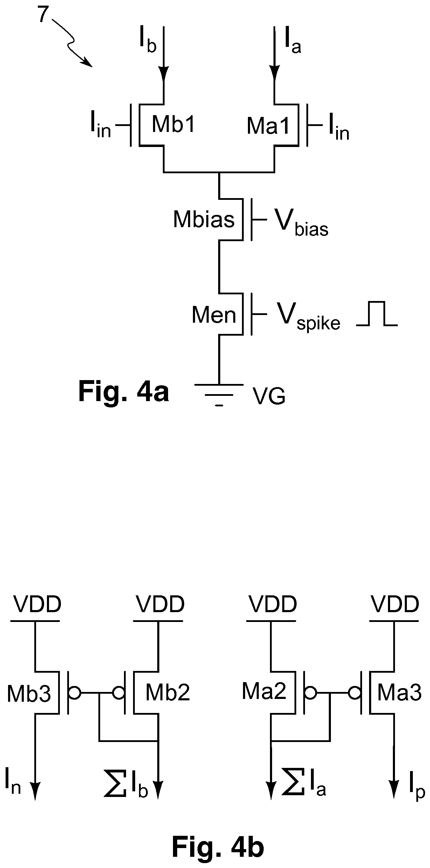

The synaptic circuits presented so far comprise circuits that generate a mismatched differential output (the two output signal values being different), amplify this difference, and send it out to the integrating neuron 11. To make the memory cell compact (i.e. the synapse), only those devices that are essential for generating mismatch need to remain within the synaptic cell and the rest can be shared. This is similar to how a readout sense amplifier stage is shared between multiple memory cells in a static random-access memory (SRAM) memory array. The shared components should then be integrated into the input stage to the neuron, i.e. into the amplifier and input stage unit 9, which may also comprise a subtraction unit to carry out the subtraction $I_a - I_b$. Concretely, a compact implementation of the differential circuit of Figure 2 only retains the differential pair and tail inside the synaptic cell as shown in Figure 4a. The current mirrors at the top (each comprising the transistors Mx2 and Mx3), which are arranged to sum the synaptic outputs, are shared between all the memory cells in a row and incorporated in the input stage of the neuron as shown in Figure 4b. It is to be noted that $\sum I_a = I_p$, where $I_p$ is a first differential output signal, and $\sum I_b = I_n$, where $I_n$ is a second differential output signal of the amplifier and input stage unit 9.

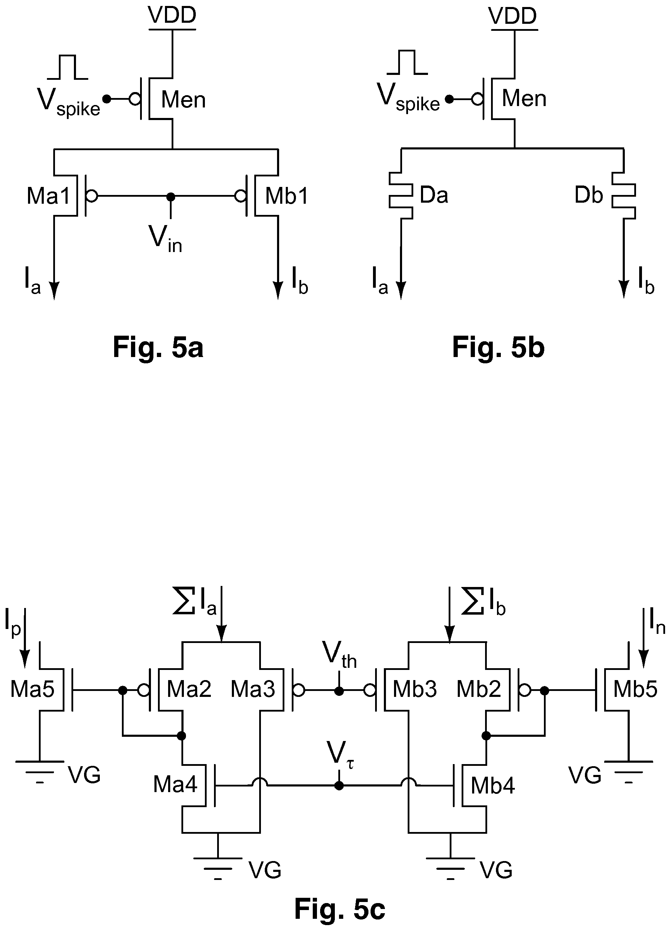

Similarly, the DPI version of the reservoir synapse cell (shown in Figure 3) is made compact by only retaining the mismatch-generating devices, Ma1 and Mb1, and optionally the switch Men inside the memory cell, and sharing the DPI amplifier stages between all the synapses in a row. Figure 5a shows the devices that are inside the compact synapse cell 5, 7. It is easy to modify the synapse circuit by replacing the transistors Ma1 and Mb1 transistors by for example memristive devices Da and Db as shown in Figure 5b. The shared DPI circuit to be integrated into the input stage of the neuron is shown in Figure 5c. The cost of doing this is that the mismatch contributing to the synaptic weights becomes smaller. However, scaling down the device sizes could compensate for this effect as that increases mismatch.

Several variants of compact synapses (e.g. the three-transistor cells) for use in neuromorphic reservoirs in a two-device differential arrangement were presented. As mismatch increases for smaller devices, the proposed memory cell scales well with technology unlike traditional analogue circuits. In other words, the proposed circuit takes advantage of the increased mismatch as the devices are made physically smaller. These synaptic cells have been used to build a neuromorphic reservoir system and may be used for temporal processing tasks in ultra-low power edge applications (i.e. in applications having only very limited amount of energy available).

The proposed random weight generator may be used for instance in biomedical smart implants that constantly monitor patients, and the circuit will never need to be recharged. Enabling these products requires ultra-low power computation and a small footprint. The proposed invention addresses this problem. Another interesting application is in "smart" wearables that monitor various modalities, such as temperature or pressure patterns. These devices have a small battery or even an energy-harvesting mechanism, such as a solar panel patch. All of this needs a processing unit which is compact and has a very low power consumption. Neuromorphic computation addresses this space. The present invention helps make the neuromorphic processor extremely compact saving cost and space.

While the invention has been illustrated and described in detail in the drawings and foregoing description, such illustration and description are to be considered illustrative or exemplary and not restrictive, the invention being not limited to the disclosed embodiment. Other embodiments and variants are understood, and can be achieved by those skilled in the art when carrying out the claimed invention, based on a study of the drawings, the disclosure and the appended claims. For example, instead of operating the circuit in current mode, it could be operated in voltage mode. More specifically, by adding a load, such as a resistor or a transistor, to the electric circuit output nodes, i.e. to the nodes where the output currents $I_a$ and $I_b$ are measured, the output from the circuit would be voltages instead of currents. Therefore, the circuit can be used either in voltage mode or current mode.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the invention.

**Claims**

1. A random weight generating circuit (1) comprising:

   • a first voltage node (VDD) for providing a supply voltage for the circuit;
   • a second voltage node (VG) at a given electric potential;
   • a first circuit element (Ma1) **characterised by** a first electric current carrier concentration for outputting a first circuit element output signal; and
   • a second circuit element (Mb1) **characterised by** a second electric current carrier concentration for outputting a second circuit element output signal, the first and second circuit elements being located between the first and second voltage nodes having a given voltage difference between them, the first circuit element output signal and the second circuit element output signal being different due to the first and second electric carrier concentrations being mismatched,

   **characterised in that** the circuit (1) comprises a subtraction unit (9) configured to generate one or more random weights such that a respective random weight is represented by a difference between the first circuit element output signal and the second circuit element output signal.

2. The circuit (1) according to claim 1, wherein the first circuit element (Ma1) and/or the second circuit element (Mb1) are one of the following elements: a transistor, a memristive element and a capacitor.

3. The circuit (1) according to claim 1 or 2, wherein the circuit further comprises a scaling circuit (Mbias, 9) for scaling the one or more weights up or down.

4. The circuit (1) according to claim 3, wherein the scaling circuit (Mbias, 9) is a transistor circuit.

5. The circuit (1) according to claim 3or 4, wherein the scaling circuit (Mbias) is between the first circuit element circuit (Ma1) or the second circuit element (Mb1) and the second voltage node (VG).

6. The circuit (1) according to any one of claims 3 to 5, wherein the scaling circuit comprises a differential pair integrator.

7. The circuit (1) according to any one of claims 3 to 6, wherein the first and second circuit elements (Ma1, Mb1) are comprised in a memory cell, and the circuit comprises a multiplicity of memory cells, and wherein the scaling circuit is shared between a multiplicity of the first circuit elements (Ma1) and a multiplicity of the second circuit elements (Mb1).

8. The circuit (1) according to any one of the preceding claims, wherein the first and second circuit elements (Ma1, Mb1) are arranged as a differential pair.

9. The circuit (1) according to any one of the preceding claims, wherein the circuit (1) further comprises a switch (Men), the operation of which is configured to be controlled by a spike signal from an artificial neuron for selectively turning on or off the circuit (1), and wherein the first and second circuit element output signals are currents.

10. The circuit (1) according to any one of the preceding claims, wherein the circuit further comprises a readout circuit for reading the first element output signal and the second element output signal.

11. The circuit (1) according to claim 10, wherein the readout circuit comprises a current mirror and/or a differential pair integrator.

12. The circuit (1) according to claim 10 or 11, wherein the first and second circuit elements (Ma1, Mb1) are comprised in a memory cell, and the circuit comprises a multiplicity of memory cells, and wherein the readout circuit is shared between a multiplicity of the first circuit elements (Ma1) and a multiplicity of the second circuit elements (Mb1).

13. The circuit (1) according to any one of the preceding claims, wherein the first and second circuit elements (Ma1, Mb1) are comprised in a synapse cell of an artificial neural network.

14. A neuromorphic processor comprising the circuit (1) according to any of the preceding claims.

15. A method of generating one or more random weights in a circuit comprising:

- a first voltage node (VDD) for providing a supply voltage for the circuit;
- a second voltage node (VG) at a given electric potential;
- a first circuit element (Ma1) **characterised by** a first electric current carrier concentration for outputting a first circuit element output signal; and
- a second circuit element (Mb1) **characterised by** a second electric current carrier concentration for outputting a second circuit element output signal, the first and second circuit elements being located between the first and second voltage nodes having a given voltage difference between them, the first circuit element output signal and the second circuit element output signal being different due to the first and second electric carrier concentrations being mismatched, **characterised by**

generating a respective random weight by subtracting the second circuit element output signal from the first circuit element output signal to represent the respective random weight as a difference between the first circuit element output signal and the second circuit element output signal.

Fig. 1

Fig. 2

Fig. 3

7

$I_b$    $I_a$

$I_{in}$ ─┤ Mb1    Ma1 ├─ $I_{in}$

Mbias ├─ $V_{bias}$

Men ├─ $V_{spike}$   ⎍

VG

## Fig. 4a

VDD    VDD    VDD    VDD

Mb3 ┤○─○├ Mb2    Ma2 ┤○─○├ Ma3

$I_n$    $\sum I_b$    $\sum I_a$    $I_p$

## Fig. 4b

**Fig. 5a**

**Fig. 5b**

**Fig. 5c**

Europäisches
Patentamt

European
Patent Office

Office européen
des brevets

# EUROPEAN SEARCH REPORT

Application Number

EP 19 15 0781

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 8 384 569 B2 (IPGOAL MICROELECT SICHUAN CO [CN]; ZHU GUOJUN [CN]) 26 February 2013 (2013-02-26) * abstract; claims 1-20; figures 1, 3 * * column 1, line 37 - column 4, line 54 * | 1-8, 10-12,15 | INV. G06N3/063 G06N3/04 |
| X | US 2008/313250 A1 (LEE CHOONG-HOON [KR] ET AL) 18 December 2008 (2008-12-18) * abstract; claims 1-20; figures 1-7 * * paragraph [0003] * * paragraph [0008] - paragraph [0021] * * paragraph [0048] - paragraph [0079] * * paragraph [0029] - paragraph [0036] * * paragraph [0091] - paragraph [0094] * | 1-8, 10-12,15 | |
| X | MELIKA PAYVAND ET AL: "A neuromorphic systems approach to in-memory computing with non-ideal memristive devices: From mitigation to exploitation", ARXIV.ORG, CORNELL UNIVERSITY LIBRARY, 201 OLIN LIBRARY CORNELL UNIVERSITY ITHACA, NY 14853, 13 July 2018 (2018-07-13), XP081248190, DOI: 10.1039/C8FD00114F | 1-3,14, 15 | |
| A | * the whole document * | 4-13 | TECHNICAL FIELDS SEARCHED (IPC) G06N |
| A | EP 1 130 771 A1 (FUJI PHOTO FILM CO LTD [JP]) 5 September 2001 (2001-09-05) * paragraph [0001] - paragraph [0048] * * paragraph [0060] - paragraph [0069] * * paragraph [0080] - paragraph [0085] * | 1-15 | |
| A | US 5 247 479 A (YOUNG IAN [US]) 21 September 1993 (1993-09-21) * the whole document * | 1-15 | |

-/--

The present search report has been drawn up for all claims

| Place of search | Date of completion of the search | Examiner |
|---|---|---|
| The Hague | 8 July 2019 | Cilia, Elisa |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

page 1 of 2

Europäisches
Patentamt

European
Patent Office

Office européen
des brevets

**EUROPEAN SEARCH REPORT**

Application Number

EP 19 15 0781

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ELISABETTA CHICCA ET AL: "Neuromorphic Electronic Circuits for Building Autonomous Cognitive Systems", PROCEEDINGS OF THE IEEE., vol. 102, no. 9, 1 May 2014 (2014-05-01), pages 1367-1388, XP055602172, US ISSN: 0018-9219, DOI: 10.1109/JPROC.2014.2313954 * the whole document * ----- | 1-15 | |
| | | | **TECHNICAL FIELDS SEARCHED (IPC)** |

The present search report has been drawn up for all claims

| Place of search | Date of completion of the search | Examiner |
|---|---|---|
| The Hague | 8 July 2019 | Cilia, Elisa |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 15 0781

This annex lists the patent family members relating to the patent documents cited in the above-mentioned European search report.
The members are as contained in the European Patent Office EDP file on
The European Patent Office is in no way liable for these particulars which are merely given for the purpose of information.

08-07-2019

| Patent document cited in search report | | Publication date | Patent family member(s) | | Publication date |
|---|---|---|---|---|---|
| US 8384569 | B2 | 26-02-2013 | CN 101834586 A | | 15-09-2010 |
| | | | US 2011260897 A1 | | 27-10-2011 |
| US 2008313250 | A1 | 18-12-2008 | DE 102008015578 A1 | | 16-10-2008 |
| | | | FR 2914076 A1 | | 26-09-2008 |
| | | | KR 20080086567 A | | 26-09-2008 |
| | | | US 2008313250 A1 | | 18-12-2008 |
| EP 1130771 | A1 | 05-09-2001 | DE 60119010 T2 | | 14-09-2006 |
| | | | EP 1130771 A1 | | 05-09-2001 |
| | | | JP 4544683 B2 | | 15-09-2010 |
| | | | JP 2001244747 A | | 07-09-2001 |
| | | | KR 20010085673 A | | 07-09-2001 |
| | | | US 2001017569 A1 | | 30-08-2001 |
| US 5247479 | A | 21-09-1993 | JP H05198184 A | | 06-08-1993 |
| | | | US 5247479 A | | 21-09-1993 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **E. CHICCA et al.** Neuromorphic electronic circuits for building autonomous cognitive systems. *Proceedings of the IEEE 102.9,* September 2014, vol. 102 (9), ISSN 0018-9219, 1367-1388